# EUROPEAN PATENT APPLICATION

(11) **EP 0 642 768 A1**
(43) Date of publication of application: **15.03.1995**
(21) Application number: 94202291.4
(22) Date of filing: 09.08.1994
(51) Int. Cl.: A61C 1/05

(54) **A device for body care, in particular for dentistry or pedicure**

(30) Priority: 09.08.1993 NL 9301380
(71) Applicant: Venootschap onder firma Havenco, NL-5223 AP 's-Hertogenbosch (NL)
(72) Inventor: van Barneveld, Hendric Adriaan, NL-6921 VW Duiven (NL)
(74) Representative: Vollebregt, Cornelis Jacobus, Ir.

(57) **Abstract**

The invention relates to a device for body care provided with a handpiece (1), on one end of which a treatment means is provided, which can be driven by means of a motor connected to said handpiece, a line (7) for the supply of pressurized air being connected to an air channel (8) provided in said handpiece and a line (9) for supplying a liquid being connected to a liquid channel (13) provided in said handpiece, whereby said air channel and said liquid channel terminate near said treatment means, whereby a non-return valve (12) is provided near the connection of the liquid channel and the liquid supply line, which non-return valve (12) only allows liquid to flow in the direction of the treatment means, whilst an additional line for the supply of pressurized air is provided, which opens into the liquid channel just downstream of said non-return valve. The invention furthermore relates to a method of operating the above device.

## Description

The invention relates to a device for body care provided with a handpiece, on one end of which a treatment means is provided, which can be driven by means of a motor connected to said handpiece, a line for the supply of pressurized air being connected to an air channel provided in said handpiece and a line for supplying a liquid being connected to a liquid channel provided in said handpiece, whereby said air channel and said liquid channel terminate near said treatment means.

Devices of this type are for example used by dentists and/or pedicures, whereby the treatment means is for example a cutter, a polishing means or the like for treating the teeth and/or the skin.

A fine mist or spray of liquid droplets, generally water droplets, is thereby formed near the treatment means by mixing the jet of liquid exiting from the liquid channel near the treatment means during operation with an air jet exiting from the air channel, which air jet intersects the exiting jet of liquid at an angle.

The construction of known devices of this type is thereby such that when the drive of the treatment means is stopped, the supply of liquid and air is also interrupted automatically. A problem which occurs thereby is the fact that when the supply of pressurized liquid is interrupted, a certain amount of liquid is still present in the liquid channel extending through the device. As a result of this liquid will continue to drop for some time after the drive of the treatment means has been stopped, which not only is inconvenient, but which may also imply a risk of infection.

In order to overcome this drawback it has been proposed to provide the device with a return suction valve, by means of which part of the liquid remaining behind in the liquid channel can be sucked back. When the treatment means is put into action again this sucked-back liquid is sprayed again. This constitutes a great risk of infection, however.

The object of the invention is to obtain a device of the above kind, wherein the above-described drawbacks of the known devices can be avoided.

According to the invention this may be achieved in that a non-return valve is provided near the connection of the liquid channel and the liquid supply line, which non-return valve only allows liquid to flow in the direction of the treatment means, whilst an additional line for the supply of pressurized air is provided, which opens into the liquid channel just downstream of said non-return valve.

By using the construction according to the invention it may be effected that when the drive of the treatment means is stopped and thus the supply of pressurized liquid is stopped the non-return valve will close and the part of the liquid channel located downstream of the non-return valve is blown clear entirely by means of the pressurized air supplied through said additional line. As a result of this the liquid channel is completely blown out directly upon stopping the drive of the treatment means, so that no liquid will remain behind within the liquid channel. It will be apparent that as a result of this also the risk of infection will be avoided.

The invention will be explained in more detail hereafter with reference to an embodiment of the construction according to the invention diagrammatically illustrated in the accompanying Figures.

Figure 1 is a diagrammatic view of a device according to the invention.

Figure 2 is a larger-scale, partly elevational and partly sectional view of a part of the device shown in Figure 1.

Figure 3 is a larger-scale view of a part of the liquid passage and non-return valve and the additional air pipe connected to said passage.

Figure 4 is a schematic view of valves and the like, via which the supply of liquid and air to the device according to the invention is controlled.

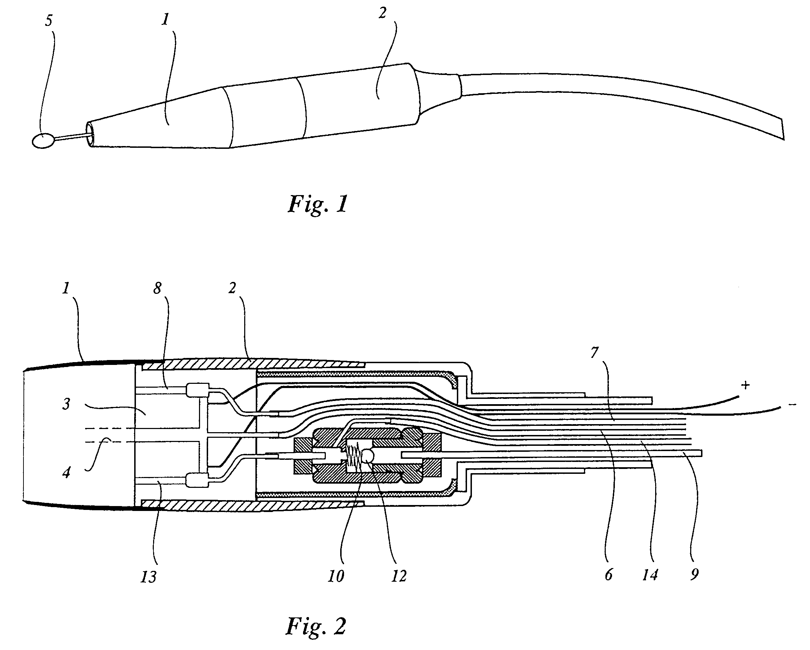

The device shown in Figure 1 comprises a first grip part 1 made up of a hollow casing, which is joined at one end by a hollow casing 2. A micro-electromotor 3, which is diagrammatically indicated in Figure 2, is positioned within the casing 2. A treatment means 5 projecting beyond the front end of the handpiece 1 may be driven by means of the micromotor 3, via a shaft 4 diagrammatically indicated in Figure 2. Said treatment means 5 may for example be a cutter or the like used by a dentist, pedicure or the like, by means of which teeth or the skin or the like may be treated.

A line 6 for the supply of cooling air to the motor is connected to the motor in a usual manner.

Furthermore a line 7 for the supply of pressurized air is provided, said line 7 being connected to an air channel 8 extending through the casing 2 and the handpiece 1, said air channel terminating near the end of the handpiece 1 remote from the casing 2 in a manner known per se.

Furthermore a line 9 for the supply of a liquid, in particular pressurized water, is connected to the device. Said line 9 opens into a chamber 10 accommodating a non-return valve, which is made of a spring- 11 loaded ball 12 in the illustrated embodiment. Via this chamber 10 housing the non-return valve 12 the liquid line is in communication with a liquid channel 13 extending through the shell 2 and the handpiece 1. Said liquid channel 13 likewise terminates near the end of the handpiece 1 remote from the casing 2.

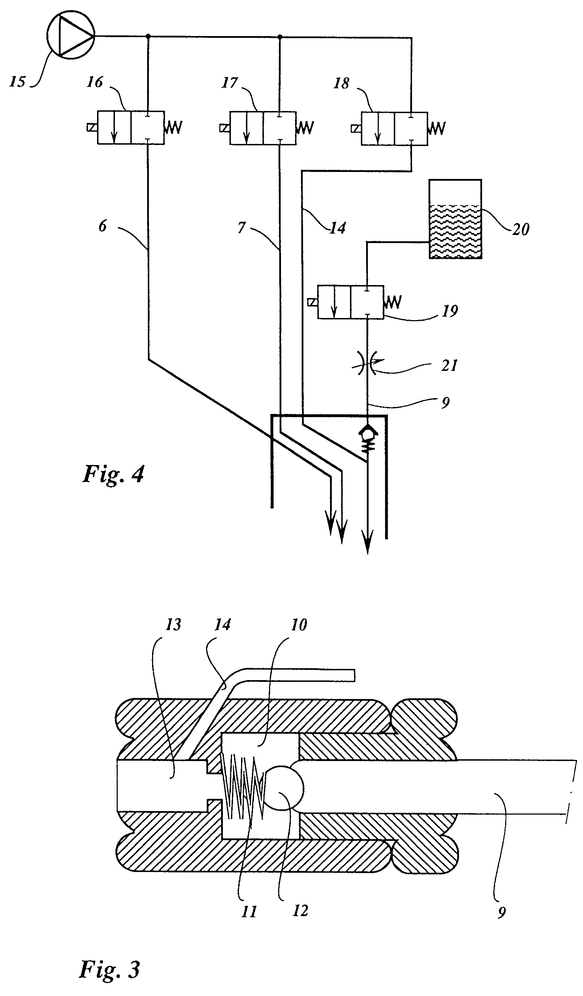

As is furthermore apparent in particular from Figures 2 and 3 an additional line 14 for the supply of pressurized air opens into the liquid channel 13, just downstream of the non-return valve 12.

As is furthermore shown in Figure 4 the lines 6, 7 and 14 for the supply of pressurized air are connected to a compressor 15. Valves 16, 17, 18 are thereby incorporated in the respective lines 6, 17, 19, said valves in a first position allowing air to pass from the compressor 15 through the lines 6, 7 and 14, and in another position blocking the passage of air through said lines 6, 7 and 14.

The liquid line 9, in which a valve 19 is provided, is connected to a liquid tank 20.

Besides the valve 19, by means of which the passage through the line 9 can be shut off entirely, if desired, also a flow control valve 21 is provided in the line 9 in a conventional manner.

When the device is put into operation, the valves 16, 17 and 19 will be opened. The operative motor 3 will then be cooled by pressurized air supplied through the line 6. The liquid will flow to the end of the handpiece 1 located near the treatment means 5 via the line 9 and the liquid passage 13 and exit there. This exiting jet of liquid is hit by the air being supplied via the line 7 and the passage 8, which opens at an angle with respect to the jet of liquid exiting from the passage 13, near the end of the handpiece 1 located near the treatment means 5. As a result of this a fine spray or mist of liquid droplets is formed, in a manner known per se, for cooling the treatment means 5 and/or of the part of the body, such as for example the teeth, the skin or the like, being treated with the treatment means.

When the device is stopped the valves 16 and 19 will be closed, so that the supply of liquid via the line 9 and the water passage 13 as well as the supply of pressurized air via the line 6 will be interrupted. A certain amount of liquid will still be present within the liquid channel 13, however. When the device is stopped the valve 18 will be opened, however, so that air is blown into the liquid passage 13 via the additional air supply pipe 14 just downstream of the non-return valve 12, which prevents liquid from flowing from the container 20 into the interior of the device. It will be apparent that as a result of this all liquid will be blown out of the liquid passage 13, which action is furthermore supported by the air also flowing out via the air pipe 7 and the air passage 8. After ± 1.2 - 1.5 seconds the valve 18 is closed again, while simultaneously also the valve 17 will close, as a result of which also the supply of pressurized air will be interrupted.

By placing the non-return valve mechanism within the casing 2 housing the motor 3 a compact construction of the device is obtained, whilst also the volume of the liquid channel 13, which is to be blown clear after the device has been stopped, is kept small thereby.

## Claims

1. A device for body care provided with a handpiece, on one end of which a treatment means is provided, which can be driven by means of a motor connected to said handpiece, a line for the supply of pressurized air being connected to an air channel provided in said handpiece and a line for supplying a liquid being connected to a liquid channel provided in said handpiece, whereby said air channel and said liquid channel terminate near said treatment means, characterized in that a non-return valve is provided near the connection of the liquid channel and the liquid supply line, which non-return valve only allows liquid to flow in the direction of the treatment means, whilst an additional line for the supply of pressurized air is provided, which opens into the liquid channel just downstream of said non-return valve.

2. A device according to claim 1, characterized in that said non-return valve is provided near the motor within the device.

3. A device according to claim 1 or 2, characterized in that a valve is incorporated in said additional line for the supply of pressurized air, said valve shutting off said line during normal operation of the device and briefly releasing the passage through said additional line when the motor is being turned off.

4. A device according to claim 3, characterized in that a valve is provided in the line for the supply of pressurized air being connected to the air channel that terminates near said treatment means, said valve releasing the passage through the air line in question when the device is put into operation and shutting off the air line in question after the motor has been turned off, at least substantially at the exact moment that the passage through said additional air line is shut off.

5. A method of operating a device for body care provided with a handpiece, on one end of which a treatment means is provided, which can be driven by means of a motor connected to said handpiece, a line for the supply of pressurized air being connected to an air channel provided in said handpiece and a line for supplying a liquid being connected to a liquid channel provided in said handpiece, whereby said air channel and said liquid channel terminate near said treatment means, characterized in that during operation the liquid is supplied via a non-return valve provided near the connection of the liquid channel and the liquid supply line, which non-return valve only allows liquid to flow in the direction of said treatment means, and that the supply of liquid is interrupted when the device is being stopped and pressurized air is supplied into said liquid channel via an additional line just downstream of said non-return valve.
